Europäisches Patentamt

European Patent Office

Office européen des brevets

(11) Numéro de publication: **0 375 530**
**A1**

## (12) DEMANDE DE BREVET EUROPEEN

(21) Numéro de dépôt: **89403524.5**

(22) Date de dépôt: **18.12.89**

(51) Int. Cl.5 **H02G 1/12**

(30) Priorité: **22.12.88 FR 8816999**

(43) Date de publication de la demande:
**27.06.90 Bulletin 90/26**

(84) Etats contractants désignés:
**BE CH DE ES GB IT LI NL SE**

(71) Demandeur: **AEROSPATIALE Société Nationale Industrielle**
**37, Boulevard de Montmorency**
**F-75781 Paris Cédex 16(FR)**

(72) Inventeur: **Commes, Bernard**
**lot "Le Cordon d'Or" no41 Saint Médard d'Eyrans**
**F-33650 La Brede(FR)**

(74) Mandataire: **Barnay, André François**
**Cabinet Barnay 80 rue Saint-Lazare**
**F-75009 Paris(FR)**

(54) **Outil pour dénuder des câbles, notamment des câbles constitués.**

(57) Dans cet outil du type comprenant un organe tubulaire dans lequel on engage le ou les conducteurs afin de faire pénétrer ledit organe entre celui-ci ou ceux-ci et la gaine externe du câble à couper, ledit organe tubulaire (4) est positionné de façon amovible par une extrémité sur un élément d'un support (1) de forme allongée, de façon à s'étendre parallèlement à celui-ci et dans le même sens en laissant subsister entre eux un intervalle (5) qui est fermé à l'extrémité opposée dudit support (1) par un moyen de coupe (12) monté sur cette extrémité de façon orientable entre une position de coupe axiale et une position de coupe radiale.

FIG.1

## Outil pour dénuder des câbles, notamment des câbles constitués.

La présente invention est relative au dénudage, c'est-à-dire au découpage et à l'enlèvement d'un tronçon de gaine extérieure, en extrémité, des câbles électriques, optiques ou autres, et d'une façon générale de tout corps cylindrique protégé par une gaine souple, ou relativement souple.

L'invention a été développée notamment, bien que non exclusivement, pour le dénudage des câbles électriques dits "constitués" comportant plusieurs couches de conducteurs indépendants isolés, torsadés ensemble, les torons ainsi constitués étant eux-mêmes protégés par une gaine extérieure protectrice, isolante ou conductrice, ainsi que pour le dénudage des câbles constitués surgainés qui peuvent comprendre un ou plusieurs conducteurs isolés et/ou blindés.

Les câbles de ces types sont principalement utilisés dans des secteurs techniques dans lesquels une très haute précision est absolument impérative et, pour raccorder de tels câbles préalablement coupés aux longueurs voulues, il est nécessaire de dénuder leurs extrémités de telle manière que la gaine extérieure soit coupée franchement et nettement, d'une façon parfaitement radiale, c'est-à-dire exactement à 90° de leur axe.

On connait déjà de nombreux procédés et appareils pour le dénudage des extrémités des câbles électriques, mais aucun ne présente une fiabilité absolue et/ou ne procure une qualité de coupe franche, nette et parfaitement radiale.

En outre la protection des isolants, ou gaines, sous-jacents n'est pas assurée dans un appareil mécanique ou manuel lorsque l'épaisseur de la gaine externe est irrégulière - ce qui est le cas pour de nombreux câbles constitués - et les couches sous-jacentes risquent alors d'être détériorées soit par un réglage inadapté, soit par un défaut de dextérité manuelle d'un opérateur.

FR-A-2.299.746 décrit un procédé et un dispositif pour enlever un tronçon de longueur déterminée du blindage (ou de la gaine) d'un câble coaxial, suivant lequel on introduit les torons des conducteurs dans un organe cylindrique tubulaires, ou poinçon, de manière à le faire pénétrer sous le blindage, entre celui-ci et les torons du câble à dénuder, provoquant ainsi un gonflement annulaire du blindage devant l'extrémité du poinçon, et on fait passer le câble à travers une ouverture d'une matrice dont le diamètre est égal à celui, externe, du blindage, provoquant ainsi une coupe de celui-ci autour de l'extrémité coupante dudit poinçon.

Cependant la coupe obtenue au moyen de ce dispositif est effectuée en biais en raison du fait que pour pouvoir couper le blindage, l'extrémité du poinçon doit être taillée en biseau. Ce dispositif ne peut donc convenir pour obtenir la coupe franche radiale désirée.

FR-A-2.614. 142 décrit un autre dispositif de dénudage qui est particulièrement étudié pour le dénudage d'un fil gainé, et comprenant un support tubulaire dans lequel est engagé et serré le fil à dénuder, et un ensemble de dénudage également tubulaire comportant des lames de coupe orthogonales à l'axe du fil et montées oscillantes en se rapprochant ou en s'éloignant du conducteur, et des moyens pour couper la gaine axialement.

Comme la plupart des autres dispositifs connus de dénudage, celui-ci ne permet pas de contrôler avec précision la profondeur des coupes effectuées axialement et radialement, ce qui, pour ce dispositif, ne présente qu'une importance relative puisqu'aussi bien il n'y a pas autour du conducteur d'isolant à préserver des détériorations.

Cet appareil ne convient donc pas non plus pour atteindre le but de l'invention qui est d'obtenir un dénudage radial net et franc sans aucun risque de détériorer les isolants des conducteurs sous-jacents tout en effectuant une coupe parfaitement radiale.

L'invention a pour but de remédier à ces inconvénients.

Elle a pour objet à cet effet un outil de dénudage de câbles, du type comprenant un organe tubulaire dans lequel on engage le ou les conducteurs afin de faire pénétrer ledit organe entre celui-ci ou ceux-ci et la gaine externe du câble à couper, caractérisé en ce que ledit organe tubulaire est positionné par une extrémité sur un élément d'un support de forme allongée, de façon à s'étendre parallèlement à celui-ci et dans le même sens en laissant subsister entre eux un intervalle qui est fermé à l'extrémité opposée dudit support par un moyen de coupe monté sur cette extrémité de façon orientable entre une position de coupe axiale et une position de coupe radiale.

Suivant une autre caractéristique de l'invention, ledit moyen de coupe est engagé dans un trou ménagé dans l'épaisseur de l'extrémité dudit organe tubulaire, sans toutefois faire saillie à l'intérieur dudit organe.

La description qui va suivre, en regard des dessins annexés à titre d'exemples non limitatifs, permettra de bien comprendre comment l'invention peut être mise en pratique.

La figure 1 est une vue en élévation latérale d'un outil à dénuder les câbles suivant l'invention.

La figure 2 est une vue partielle de dessus montrant le montage de la lame de coupe à l'extrémité du support.

La figure 3 est une vue de détail à plus grande échelle montrant l'engagement de la lame de coupe dans la paroi de l'organe tubulaire.

La figure 4 est une vue partielle en coupe suivant la ligne IV-IV de la figure 1, montrant le montage de la butée réglable sur l'organe tubulaire.

Les figures 5, 6 et 7 montrent les différentes phases de l'utilisation de l'outil suivant l'invention pour dénuder un câble.

La figure 8 est une vue en bout d'une variante de l'outil comportant trois lames de coupe.

La figure 9 est une vue partielle d'une variante de l'outil suivant l'invention, comportant un dispositif d'entraînement du câble.

La figure 10 est une vue partielle d'une autre variante.

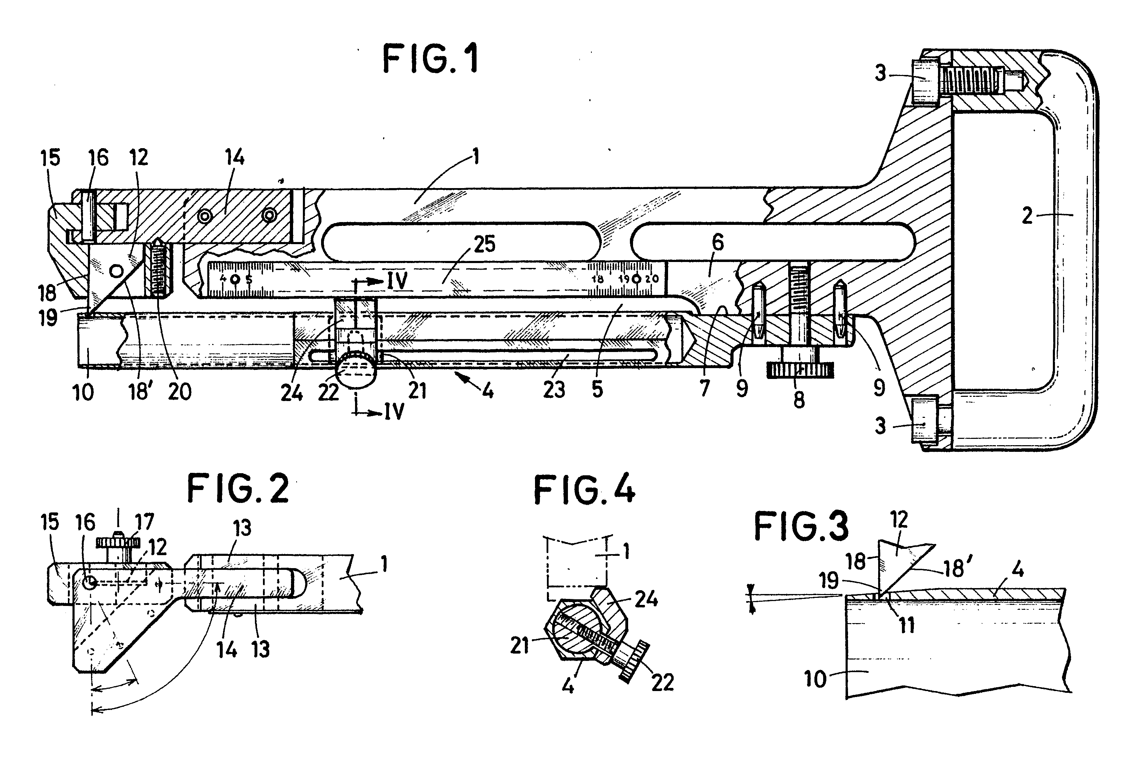

En se référant aux dessins, et plus particulièrement à la figure 1, l'outil à dénuder les câbles suivant l'invention comprend un support 1 de forme allongée constitué par une plaque rigide, par exemple en métal, ajourée dans un but d'allègement, et pourvue d'une poignée transversale 2 fixée sur le support 1, par exemple au moyen de vis 3, l'agencement étant tel que l'axe longitudinal du support 1 coïncide avec le milieu de la poignée 2.

Un organe tubulaire désigné dans son ensemble par la référence 4 est fixé sur le support 1, de façon à s'étendre parallèlement à celui-ci et dans le même sens, en délimitant avec le support un intervalle 5.

Dans ce but, le support 1 comporte une partie élargie 6, voisine de la poignée 2, ayant une surface plane parallèle à l'axe du support 1 et sur laquelle est appliqué un méplat axial 7 de l'organe 4, qui est serré au moyen d'une vis à tête 8 et maintenu en position par exemple par deux goujons de positionnement 9.

L'organe tubulaire 4 a une longueur telle qu'il s'étend un peu au delà de l'extrémité du support 1 opposée à la poignée 2, et il comporte un alésage longitudinal 10 qui, suivant l'exemple représenté, est borgne et ouvert à son extrémité opposée à ladite poignée.

Le bord de l'extrémité ouverte de l'organe tubulaire 4 est aminci, comme représenté à la figure 3, dans un but qui apparaîtra dans la suite, et comporte, un peu en retrait, un trou borgne 11 situé entre les axes de l'organe tubulaire 4 et du support 1 et dans le plan défini par ces axes.

Une lame de coupe 12, qui a dans son ensemble de préférence une forme à peu près triangulaire, est montée articulée sur l'extrémité du support 1 opposée à la poignée 2.

Suivant l'exemple représenté, l'extrémité du support 1 a la forme d'une chape (figure 2) et porte entre ses branches 13 un bras 14 sur l'extrémité duquel une tête porte-lame 15 est montée pivotante autour d'un axe 16 contenu dans le plan précité délimité par les axes du support 1 et de l'organe tubulaire 4, et la lame 12 est fixée, dans ce même plan, sur la tête 15 au moyen d'une vis 17. La lame 12 comporte une pointe 19 constituée par un angle entre deux arêtes coupantes 18, 18' dont l'une, 18, est perpendiculaire à l'axe de l'organe tubulaire 4 et l'autre, 18', est inclinée de l'organe tubulaire 4 vers le bras 14 en direction de la poignée 2, la pointe 19 étant engagée dans le trou borgne 11 et ainsi empêchée de dépasser à l'intérieur de l'alésage borgne 10 de l'organe 4.

Bien que suivant cet exemple le trou 11 est borgne, on comprend bien entendu que ce trou peut traverser la paroi de l'organe tubulaire étant entendu que la pointe 19 de la lame ne s'étend pas au delà de l'épaisseur de cette paroi et ne fait pas saillie à l'intérieur de l'alésage 10.

Une autre forme de réalisation de l'outil coupant pourrait être une molette ou tout autre organe coupant circulaire (fraise, meule...) dont la partie en contact avec l'élément à couper serait située dans un trou 11 cruciforme répondant aux impératifs de positionnement de la molette.

D'une façon avantageuse la tête porte-lame 15 est indexable angulairement autour de son axe 16 entre sa position dans ledit plan et une autre position à 90°, comme représenté à la figure 2, et peut être maintenue dans les positions choisies au moyen d'un organe d'encliquetage 20 comme connu en soi.

L'outil comporte enfin une butée 21 montée coulissante dans l'alésage 10 de l'organe tubulaire 4, dans lequel elle peut être immobilisée au moyen d'une vis 22 qui s'étend à travers une fente longitudinale latérale 23 de l'organe tubulaire et à travers un curseur 24 qui peut ainsi être réglé en position devant une réglette graduée 25 fixée sur le support 1.

On comprend que grâce à l'agencement décrit, l'organe tubulaire 4 peut être très facilement et rapidement monté ou démonté du support 1 et, suivant l'invention, il est prévu une série d'organes tubulaires analogues ayant des alésages de différents diamètres, correspondant à différents types de câbles pouvant être dénudés.

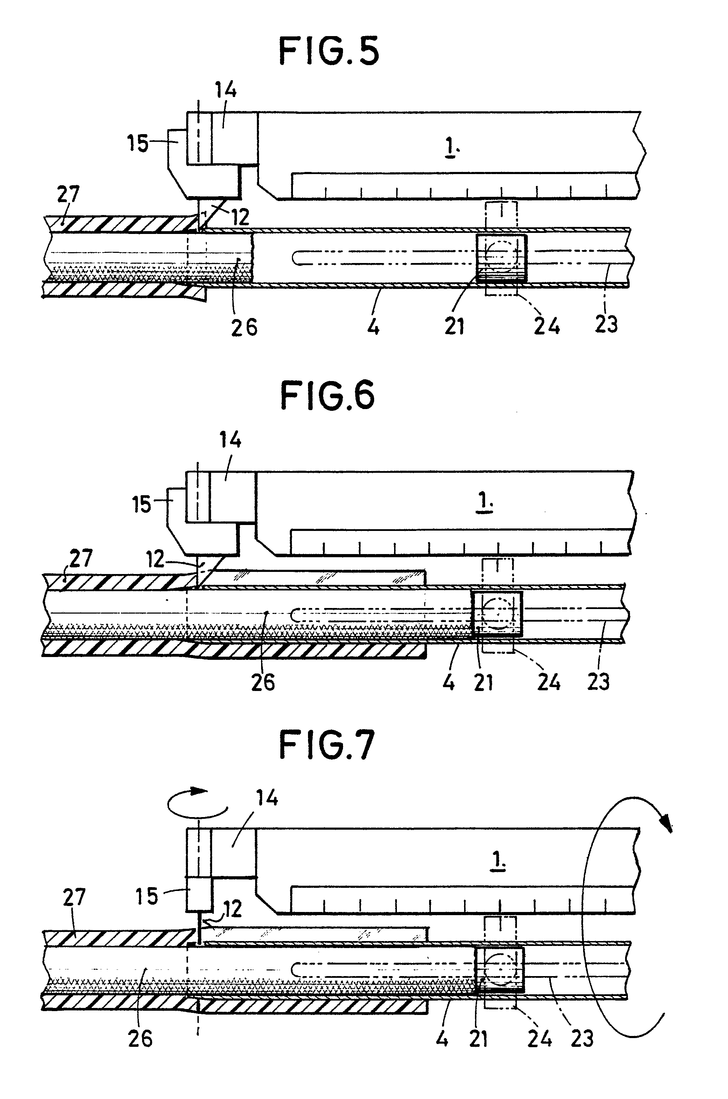

On décrira maintenant le mode d'emploi de l'outil ci-dessus en se référant aux figures 5 à 7.

Le câble à dénuder est présenté devant l'extrémité ouverte de l'alésage 10 de l'organe tubulaire 4 choisi en fonction du diamètre du câble à dénuder, après avoir, de préférence, dégagé quelques mm de la gaine 27, afin de faciliter l'introduction des torons de conducteurs 26 dans l'alesage de l'organe 4, avec l'extrémité amincie de ce dernier introduite entre les conducteurs et la gaine 27, la butée 21 ayant été préalablement réglée en position (figure 5), et la lame 12 ayant été orientée dans sa position parallèle à l'axe de l'organe 4.

On fait ensuite avancer le câble axialement dans l'alésage de l'organe tubulaire, ce mouvement provoquant une coupure longitudinale de la gaine par l'arête 18 de la lame 12 jusqu'à ce que l'extrémité des torons 26 ait atteint la butée 21 (figure 6).

La tête porte-lame 15 est alors orientée à 90° de sa position initiale (figure 7) et on fait alors tourner l'outil au moyen de sa poignée 2 en prenant appui avec la buté 21 contre l'extrémité 26 des torons du câble, produisant une coupe radiale régulière de la gaine par l'arête 18 ou 18' suivant le sens dans lequel on fait tourner l'outil.

On retire alors l'outil avec le morceau de gaine 27, qui reste sur l'organe tubulaire 4. La coupe obtenue est franche, nette et absolument perpendiculaire à l'axe du câble.

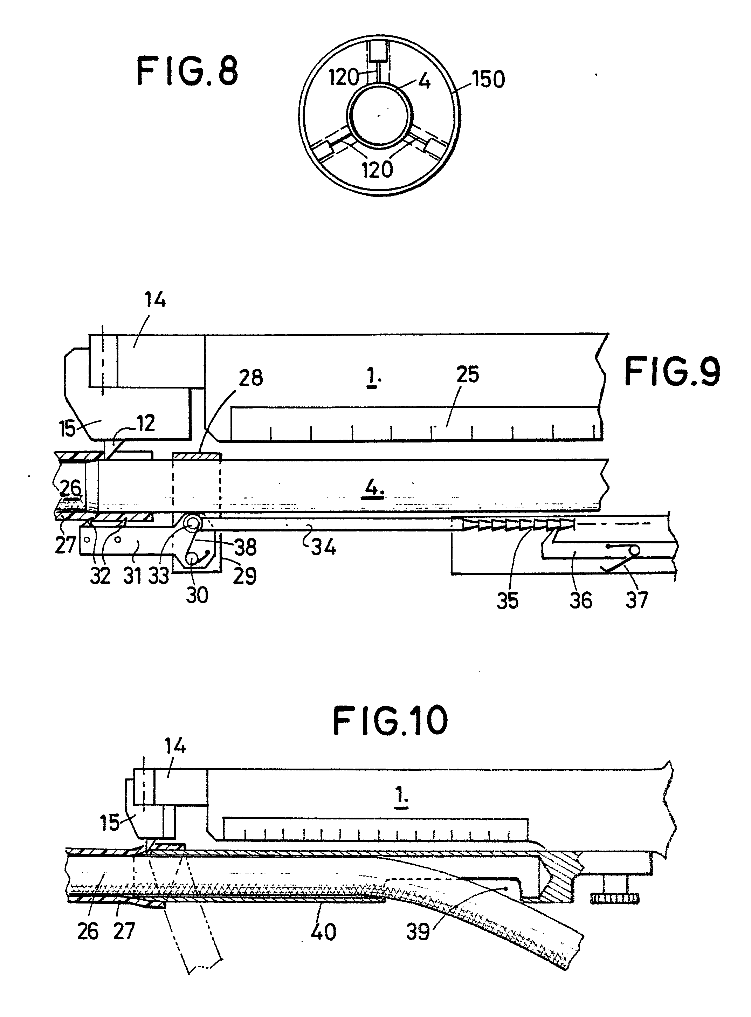

Dans une variante représentée à la figure 8, la tête porte-lame est constituée par un manchon 150, fixé sur l'extrémité du support 1, entourant l'extrémité de l'organe tubulaire 4 et à l'intérieur duquel sont fixées trois lames 120 montées pivotantes sur le manchon 150, entre celui-ci et l'organe tubulaire.

En se référant à la figure 9, la variante représentée est pourvue d'un dispositif destiné à faire avancer mécaniquement le câble sur l'organe tubulaire. Ce dispositif comprend une bague 28 entourant l'organe tubulaire 4 sur lequel elle peut coulisser longitudinalement.

La bague 28 comporte un appendice radial 29 portant un axe fixe 30 sur lequel est articulé un doigt 31 s'étendant parallèlement à l'organe tubulaire 4, vers l'ouverture de celui-ci, et comportant des dents 32 dirigées vers l'organe 4. Un second axe 33 est fixé sur le doigt 31, entre l'axe fixe 30 et l'organe 4, et sur cet axe 33 est articulée une extrémité d'une tige 34 qui s'étend en direction de la poignée 2, auprès de laquelle l'extrémité opposée de la tige 34 porte une crémaillère 35 avec laquelle peut venir en prise un crochet 36 relié à un levier d'actionnement manuel (non visible au dessin) pouvant être actionné par l'opérateur sans lâcher la poignée 2 et apte à se déplacer en translation parallèlement à la tige 34. Un premier ressort 37 sollicite élastiquement le crochet 36 en prise avec la crémaillère 35; un second ressort 38 sollicite également élastiquement les dents 32 du doigt 31 en contact avec l'organe tubulaire 4.

Cet agencement, qui est bien connu en soi, permet de tirer mécaniquement le câble en direction de la poignée 2 par une traction exercée par la tige 34 qui serre le doigt 31 avec ses dents 32 contre la gaine 27 du câble et tire celui-ci en direction de la poignée.

Suivant l'exemple de la figure 10, l'organe tubulaire 40 est dépourvu du système de butée et de curseur et présente dans sa partie postérieure, c'est-à-dire celle voisine de sa fixation sur le support 1, une ouverture allongée 39 à travers laquelle l'âme du câble, constituée par les torons 26, peut sortir au fur et à mesure que le câble avance longitudinalement sur l'organe tubulaire 40. Ce mode de réalisation peut être utilisé soit avec un indexage de la lame 12 dans une position intermédiaire telle qu'indiquée à la figure 2, permettant de découper la gaine 27 en spirale, comme représenté à la figure 10, soit avec la variante représentée à la figure 8, dans laquelle les trois lames découpent la gaine en autant de bandes longitudinales qui peuvent se séparer au fur et à mesure de l'avance du câble sur l'organe tubulaire.

L'outil suivant l'invention permet d'obtenir une coupe régulière même dans le cas d'un câble constitué dont la gaine présente une épaisseur irrégulière, en raison du fait que la surface de base est la surface interne de la gaine, qui est régulière et qui prend appui sur la surface externe de l'organe tubulaire. De plus la pointe de la lame 12, engagée dans la cavité 11, ne peut en aucun cas dépasser au delà de la surface interne de l'organe tubulaire qui constitue un écran protecteur, éliminant ainsi tout risque de blessures des conducteurs sous-jacents, dont les torons ne peuvent pas être déformés. Les qualités électriques et mécaniques des conducteurs sont ainsi sauvegardées.

Enfin les caractéristiques de l'outil assurent une qualité de travail constante et reproductible et son utilisation ne nécessite aucune main-d'oeuvre spécialisée.

D'une façon avantageuse l'organe tubulaire est usiné dans un barreau plein, de manière à présenter une partie de surface cylindrique sur une portion de sa longueur à partir de son ouverture amincie, et destinée à coopérer avec le câble, et une partie de section polygonale sur le reste de sa longueur, jusqu'à sa partie de fixation sur le support 1. On obtient ainsi un organe ayant une rigidité supérieure à celle d'un simple tube.

En variante ladite partie de surface cylindrique de l'organe tubulaire peut être réduite à un simple secteur tubulaire, comportant ledit trou 11, le câble étant alors maintenu au moyen d'organes de serrage, par exemple des billes ou des galets.

## Revendications

1. Outil de dénudage de câbles, du type comprenant un organe tubulaire dans lequel on engage le ou les conducteurs afin de faire pénétrer ledit organe entre celui-ci ou ceux-ci et la gaine externe du câble à couper, un organe de coupe orientable et des moyens pour faire avancer le câble, caractérisé en ce que ledit organe tubulaire (4) est positionné par une extrémité sur un élément d'un support (1) de forme allongée, de façon à s'étendre parallèlement à celui-ci et dans le même sens en laissant subsister entre eux un intervalle (5) qui est fermé à l'extrémité opposée dudit support (1) par un organe de coupe (12) monté sur cette extrémité, ledit organe de coupe étant engagé dans un trou (11) ménagé dans l'épaisseur de l'extrémité dudit organe tubulaire (4), sans toutefois faire saillie à l'intérieur de l'organe (4).

2. Outil suivant la revendication 1, caractérisé en ce que ledit organe tubulaire (4) comporte une extrémité limitée à un simple secteur tubulaire comportant ledit trou (11).

3. Outil suivant la revendication 1, caractérisé en ce que ledit organe de coupe est constitué par plusieurs lames (120) montées autour de l'extrémité ouverte dudit organe tubulaire (4), entre celui-ci et un support annulaire externe (150).

4. Outil suivant la revendication 3, caractérisé en ce que chacune desdites lames (120) comporte une pointe (19) constituée par le sommet d'un angle forme par deux arêtes coupantes (18, 18') et qui s'étend dans un trou (11) dudit organe (4) au voisinage de l'extrémité ouverte de celui-ci.

5. Outil suivant l'une quelconque des revendications précédentes, caractérisé en ce que ledit organe (4) comporte une fente longitudinale (23), une butée (21) étant montée coulissante dans l'alésage (10) dans lequel elle peut être immobilisée au moyen d'une vis (22) portant un curseur (24) et qui s'étend à travers ladite fente (23).

6. Outil suivant la revendication 5, caractérisé en ce .qu'il comporte une réglette graduée (25) fixée sur le support (1), devant laquelle se déplace ledit curseur (24).

7. Outil suivant l'une quelconque des revendications précédentes, caractérisé en ce que lesdits moyens pour faire avancer le câble à dénuder sur ledit organe tubulaire (4) comprennent un doigt (31, 32) articulé sur l'organe tubulaire (4) et sur une crémaillère (35) actionnée par un levier manuel.

8. Outil suivant la revendication 1, caractérisé en ce qu'il comporte une poignée (2) montée transversalement audit support (1) sur l'axe longitudinal de celui-ci.

9. Outil suivant la revendication 1, caractérisé en ce que ledit organe tubulaire (4) comporte une ouverture latérale (38) au voisinage du fond dudit alésage borgne (10).

10. Outil suivant la revendication 1, caractérisé en ce que l'extrémité ouverte dudit organe tubulaire (4) est amincie afin de faciliter sa pénétration entre la gaine (27) et les conducteurs (26) du câble.

11. Outil suivant l'une des revendications 1 ou 2, caractérisé en ce que ledit trou (11) est borgne.

12. Outil suivant la revendication 1, caractérisé en ce que les moyens de coupe (12) sont des organes coupants circulaires.

FIG.1

FIG.2

FIG.3

FIG.4

# FIG.5

# FIG.6

# FIG.7

# FIG.8

# FIG.9

# FIG.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-2452734 (COSTELOW)<br>* colonne 1, ligne 51 – colonne 3, ligne 59; figures 1-7 *<br>--- | 1 | H02G1/12 |
| A | DE-B-1125498 (DRESCHER)<br>* revendication 1; figures 1-5 *<br>----- | 1, 2, 7, 8 | |

**DOMAINES TECHNIQUES RECHERCHES (Int. Cl.5 )**

H02G

Le présent rapport a été établi pour toutes les revendications

| Lieu de la recherche | Date d'achèvement de la recherche | Examinateur |
|---|---|---|
| LA HAYE | 15 MARS 1990 | DEMOLDER J. |